# EUROPEAN PATENT APPLICATION

(11) **EP 1 988 537 A2**
(43) Date of publication of application: **05.11.2008**
(21) Application number: 08100077.0
(22) Date of filing: 03.01.2008
(51) Int. Cl.: G09G 3/34

(54) **Backlight unit driving apparatus and method thereof**

(30) Priority: 03.05.2007 KR 20070042926
(71) Applicant: Samsung Electronics Co., Ltd., Suwon-si, Gyeonggi-do 442-742 (KR)
(72) Inventor: Kang, Jeong-il 502-403, Samsung 5th Apartment, Gyeonggi-do (KR); Lee, Sang-hoon, Gyeonggi-do (KR); Park, Yung-jun 504-902, Samsung 5th Apt., Gyeonggi-do (KR); Kim, Su-gun 101-601, Suji Central I-park, Gyeonggi-do (KR); Seong, Ki-bum 506-703, Mokryeon Woosung Apt, Gyeonggi-do (KR)
(74) Representative: Rooney, John-Paul

(57) **Abstract**

A backlight unit driving apparatus is provided. The backlight unit driving apparatus includes a plurality of flash lamps (100-1,100-2,100-n) at a backlight unit (100) to supply light to a liquid crystal panel, supplies voltage necessary for discharge, and supplies a discharge initiating voltage so that the flash lamps can emit lights in a sequential order. Accordingly, motion picture characteristics improve, and good screen brightness is maintained.

## Description

### BACKGROUND OF THE INVENTION

### Field of the Invention:

The present invention relates to a backlight unit driving apparatus and a method thereof. More particularly, the present invention relates to a backlight unit driving apparatus and a method thereof, which divides an illuminating region of a backlight unit into a number of rows and illuminates the divided rows in sequences.

### Description of the Related Art:

A display apparatus such as a liquid crystal display (LCD) is employed in devices such as TVs, laptops, or desktops, to display images. Because displays such as LCD panels do not illuminate by themselves, these generally use a light from a separate light source to display images. Accordingly, a LCD employs a backlight unit at the backside of a LCD panel, and displays images, while adjusting transimisivity of light being irradiated from the backlight unit.

In particular, in displaying the images, a LCD moves liquid crystal molecules to vary opening rate of unit cells for the duration of displaying one frame, and to maintain the varied opening rate until the next frame starts. A display apparatus employing this method suffers problems such as afterimage or motion blur in motion picture, due to different responsivity of liquid crystal molecules.

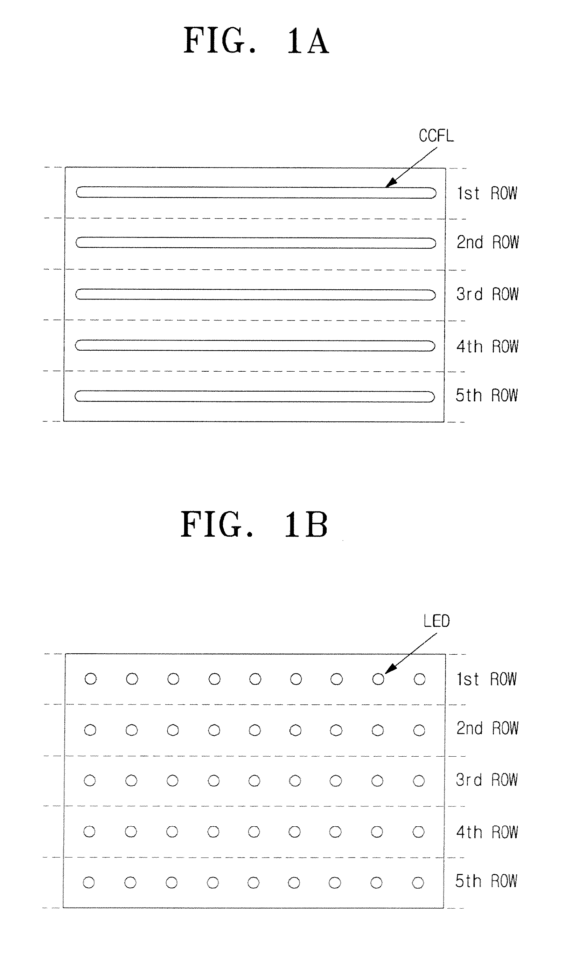

In order to solve this problem, the backlight unit is illuminated by frame units, rather than being continuously illuminated. FIGS. 1A to 1C illustrate a conventional method for driving a backlight unit.

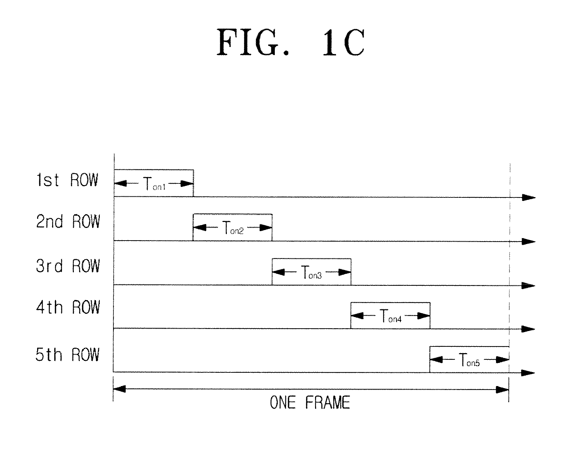

FIGS. 1A and 1B illustrate the structure of a conventional backlight unit. FIG. 1A illustrates a widely used cold cathode fluorescent lamp (CCFL), and FIG. 1B illustrates a light emitting diode (LED). FIG. 1C illustrates a driving timing for use in the driving of a conventional backlight unit.

Referring to FIGS. 1A and 1B, a backlight illuminating region is divided into five rows, and backlight of each row is controlled such that it is illuminated when in synchronization with a frame rate. This is frequently called as 'backlight scanning'. In the backlight scanning, backlights of the respective rows are illuminated according to a driving timing as exemplified in FIG. 1C.

Accordingly, backlight of the first row is controlled to be illuminated for the duration Tₒₙ₁, backlight of the second row is controlled to be illuminated for the duration Tₒₙ₂, backlight of the third row is controlled to be illuminated for the duration Tₒₙ₃, backlight of the fourth row is controlled to be illuminated for the duration Tₒₙ₄, and backlight of the fifth row is controlled to be illuminated for the duration Tₒₙ₅.

However, an associated screen darkens during backlight scanning, using a conventional CCFL or LED. Although CCFL or LED continuously illuminates, the illuminating time of backlights shortens in the backlight scanning, and therefore, the average luminosity decreases, degrading the brightness of the screen.

Increased power can be supplied to the backlights to compensate for the above problem, but this has a limit because the light source efficiency deteriorates. Alternatively, the number of backlights may be increased, but this will increase cost.

### SUMMARY OF THE INVENTION

According to the present invention there is provided an apparatus and method as set forth in the appended claims. Other features of the invention will be apparent from the dependent claims, and the description which follows.

An aspect of exemplary embodiments of the present invention is to address at least the above problems and/or disadvantages and to provide at least the advantages described below. Accordingly, an aspect of exemplary embodiments of the present invention provides a backlight unit driving apparatus and a method thereof, which performs backlight scanning, and prevents problems such as afterimage or motion blur of motion picture.

Another aspect of exemplary embodiments of the present invention provides a backlight unit driving apparatus and a method thereof, which employs a flash lamp which instantly reaches a high level of luminous flux.

In one aspect of the invention there is provided a backlight unit driving apparatus, which includes a backlight unit comprising a plurality of flash lamps, a charging circuit unit to charge a voltage for use by the plurality of flash lamps to discharge, a discharge initiating unit to supply a discharge initiating voltage to the plurality of flash lamps to discharge lights, and a control unit to control the charging circuit unit and the discharge initiating unit so that the backlight unit is driven.

Preferably, the plurality of flash lamps emit lights from upper to lower rows in a sequential order.

A switch unit may further be provided, to switch the discharge initiating voltage being supplied from the discharge initiating unit, so that the plurality of flash lamps emit lights in the respective rows of the backlight unit in a sequential order.

Preferably, the charging circuit unit includes charging circuits corresponding to the number of rows of the backlight unit.

A switch unit may further be provided, to switch a voltage being supplied from the charging circuit unit so that the plurality of flash lamps emit lights in the respective rows of the backlight unit.

Preferably, the plurality of flash lamps includes a linear or a dot-type arrangement.

Preferably, the flash lamps include one of zenon flash lamp, laser flash lamp, and arc discharge flash lamp.

Preferably, the backlight unit includes a plurality of dot-type flash lamps arranged in a vertical direction along one side of a screen, and lightguide plates to cause the lights from the plurality of dot-type flash lamps to pass against the front screen uniformly.

Preferably, the backlight unit further includes a plurality of dot-type flash lamps arranged in a vertical direction along the other side of the screen.

Preferably, the charging circuit unit includes a transformer in which the primary side has the opposite polarity to the secondary side, a transistor connected between the primary side and the ground of the transformer, to be turned on and off according to control of the control unit, a capacitor to store a voltage being supplied from the transformer, and a diode connected between the secondary side of the transformer and the capacitor, to supply a voltage induced at the secondary side of the transformer to the capacitor, if the transistor is in off state.

Preferably, at least one of the plurality of flash lamps is connected in parallel with the capacitor, to receive the voltage stored at the capacitor to use for discharging the plurality of flash lamps.

Preferably, the control unit controls the discharge initiating unit to supply the discharge initiating voltage to the plurality of flash lamps, if the flash lamps are charged with voltage necessary for discharge.

In another aspect of the invention there is provided a method of driving a backlight unit comprising a plurality of flash lamps, which includes charging a voltage for discharging the plurality of flash lamps, and supplying a discharge initiating voltage to the plurality of flash lamps to discharge lights.

Switching the discharge initiating voltage so that the plurality of flash lamps emit lights from upper to lower rows in a sequential order, may further be provided.

Preferably, the charging includes charging the plurality of flash lamps in respective rows with voltage necessary for discharge, sequentially.

Other objects, advantages and salient features of the invention will become apparent to those skilled in the art from the following detailed description, which, taken in conjunction with the annexed drawings discloses exemplary embodiments of the invention.

### BRIEF DESCRIPTION OF THE DRAWINGS

The above and other exemplary objects, features and advantages of certain exemplary embodiments of the present invention will be more apparent from the following description taken in conjunction with the accompanying drawings, in which:
FIGS. 1A and 1B illustrate the structure of a conventional backlight unit;
FIG. 1C exemplifies a driving timing for a conventional backlight unit;
FIGS. 2A and 2B illustrate a backlight unit driving apparatus according to a first exemplary embodiment of the present invention;
FIGS. 3A and 3B illustrate a backlight unit driving apparatus according to a second exemplary embodiment of the present invention;
FIG. 4A illustrates the structure of a backlight unit according to a third exemplary embodiment of the present invention;
FIG. 4B illustrates the structure of a backlight unit according to a fourth exemplary embodiment of the present invention;
FIG. 5 illustrates a backlight unit driving apparatus according to a fifth exemplary embodiment of the present invention;
FIG. 6 illustrates a backlight unit driving apparatus according to a sixth exemplary embodiment of the present invention;
FIG. 7 illustrates a backlight unit driving apparatus according to a seventh exemplary embodiment of the present invention; and
FIGS. 8 to 10 illustrate a driving time for use in the first through seventh exemplary embodiments of the present invention.

### DETAILED DESCRIPTION OF THE PREFERRED EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

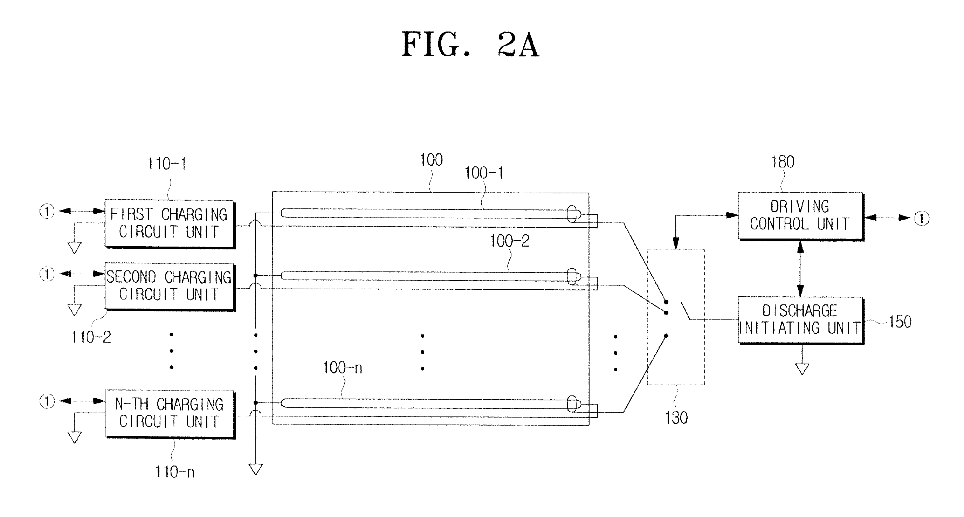

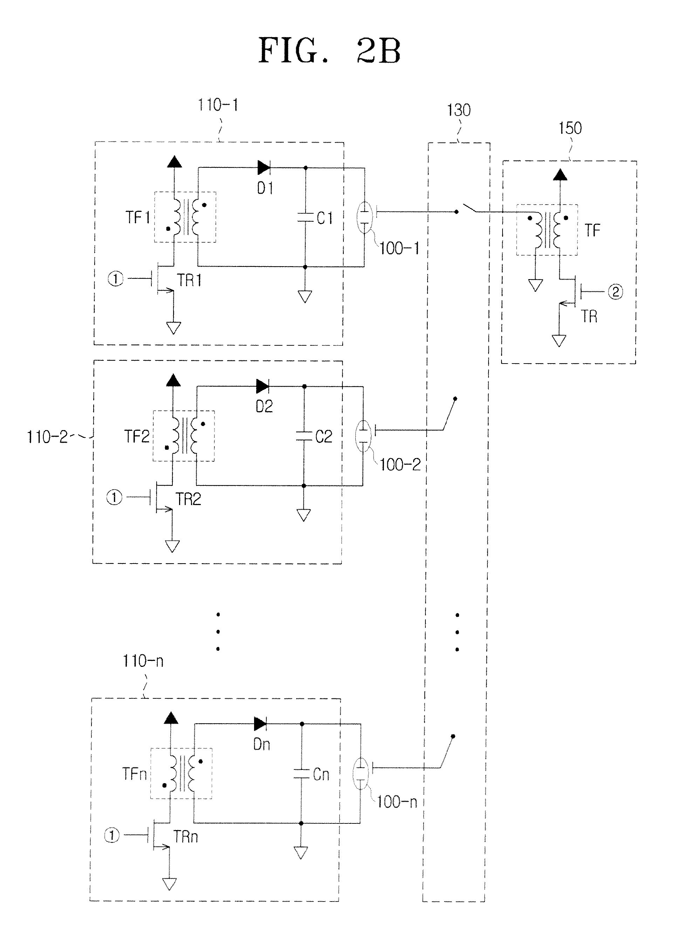

FIGS. 2A and 2B illustrate a backlight unit driving apparatus according to a first exemplary embodiment of the present invention.

Referring to FIG. 2A, a backlight unit driving apparatus includes a backlight unit 100, a first to n-th charging circuits 110-1, 110-2, ..., 110-n, a first switch unit 130, a discharge initiating unit 150, and a driving control unit 180.

The backlight unit 100 includes first to n-th flash lamps 100-1, 100-2, ..., 100-n. The flash lamps 100-1, 100-2, ..., 100-n are each driven by short-width high-current pulses, and has the ability to output strong light instantly. The flash lamps 100-1, 100-2, ..., 100-n radiate light from several hundreds of µ*S* to several tens of *mS,* and has a relatively low radiation period ranging from several Hz to several hundreds of Hz.

The flash lamps 100-1, 100-2, ..., 100-n may be implemented as a zenon flash lamp which injects gases such as zenon or krypton into a glass tube, and causes electric discharge and subsequent radiation, by applying high voltage instantly. Alternatively, laser flash lamp using a laser light, or an arc flash lamp using an arc discharge, may be employed.

The first to n-th charging circuits 110-1, 110-2, ..., 110-n are connected to both sides of the first to n-th flash lamps 100-1, 100-2, ..., 100-n, to supply voltage necessary to discharge the flash lamps 100-1, 100-2, ..., 100-n, respectively.

The discharge initiating unit 150 supplies discharge initiating voltage to the backlight unit 100, so that the flash lamps 100-1, 100-2, ..., 100-n to start discharge and radiating lights.

The first switch unit 130 switches the discharge initiating voltage being supplied from the discharge initiating unit 150, so that the flash lamps 100-1, 100-2, ..., 100-n radiate lights in sequence. In particular, the discharge initiating voltage from the discharge initiating unit 150 is switched such that the flash lamps 100-1, 100-2, ..., 100-n radiate light in sequence, each for the duration of time corresponding to one frame divided by n.

The driving control unit 180 controls the first to n-th recharge circuits 110-1, 110-2, ..., 110-n, the first switch unit 130, and the discharge initiating unit 150 so that the backlight unit 100 is driven. In particular, the first to n-th charging circuits 110-1, 110-2, ... , 110-n are driven in sequence by a control signal ① being output from the driving control unit 180, to supply voltage required for the first to n-th flash lamps 100-1, 100-2, ..., 100-n to radiate lights. The driving control unit 180 also controls the first switch unit 130 so that a flash lamp to initiate discharge is selected in sequence from upper to lower rows, from among the first to n-th flash lamps 100-1, 100-2, ..., 100-n. When a flash lamp to initiate discharge is selected, the discharge initiating unit 150 is controlled such that a discharge initiating voltage is supplied to the selected flash lamp.

FIG. 2B shows in detail the circuit structures of the first to n-th charging circuits 110-1, 110-2, ..., 110-n, and the discharge initiating unit 150.

Referring to FIG. 2B, the first charging circuit 110-1 employs a flyback circuit. The first charging circuit 110-1 includes a first transformer TF1, a first transistor TR1, a first diode D1, and a first capacitor C1.

First, the operation of the first charging circuit 110-1 is explained below. According to a control signal ① output from the driving control unit 180, the first transistor TR1 is turned on, and accordingly, voltage in the opposite polarity to that of the primary side is induced at the secondary side of the first transformer TF1, thereby turning off the first diode D1. Accordingly, electric current flows the secondary side of the first transformer TF1, and stored. If the first transistor TR1 is turned off according to the control signal ①, voltage is induced at the secondary side of the first transformer TF1, in the polarity opposite to when the first transistor TR1 is in on state, thereby turning on the first diode D1. As a result, voltage stored at the secondary side of the first transformer TF1 is charged in the first capacitor C1.

As the first transistor TR1 repeats on and off according to control signal ①, voltage for the first flash lamp 100-1 to discharge is charged in the first capacitor C1. Accordingly, voltage is supplied to the first flash lamp 100-1 in parallel connected with the first capacitor C1. The operation at the second to n-th charging circuits 110-2, ..., 110-n are the same as that of the first charging circuit 110-1 explained above, and therefore, these will not be explained for the sake of brevity. In a desirable implementation, the first to n-th charging circuits 110-1, ..., 110-n are driven in sequence to charge necessary radiation voltage, according to control signal ①.

The discharge initiating unit 150 includes a transformer TF and a transistor TR. When the transistor TR is turned on according to control signal ② of the driving control unit 180, voltage in the same polarity as that at the primary side is induced at a secondary side, and accordingly, discharge initiating voltage is supplied to the flash lamps 100-1, 100-2, ..., 100-n, respectively. The first switch unit 130 performs switching to select a flash lamp to discharge, before the transistor TR is turned on according to control signal ②.

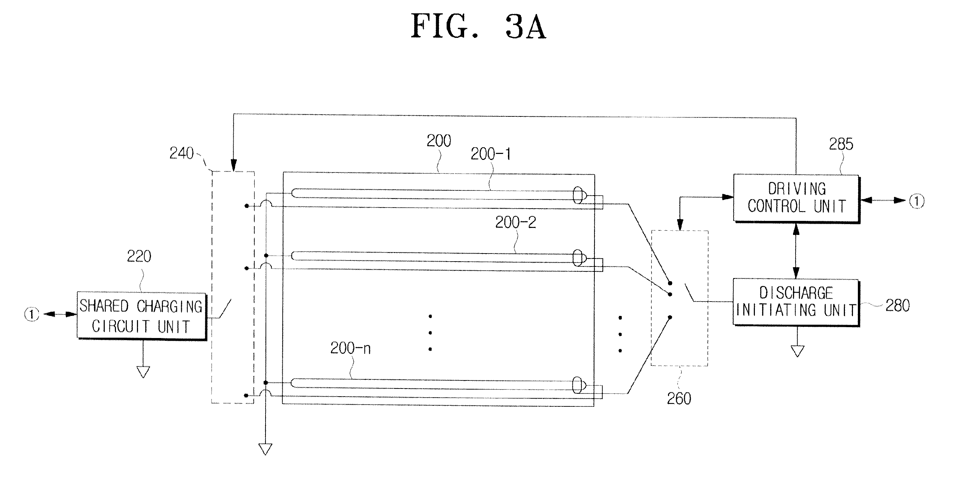

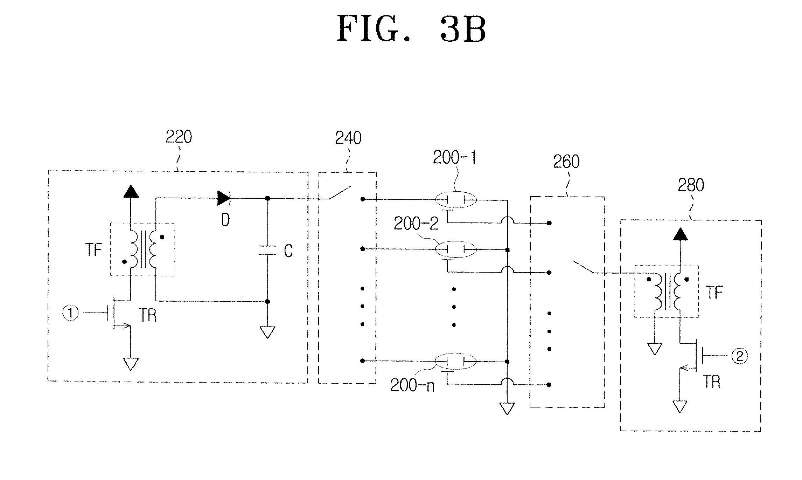

FIGS. 3A and 3B illustrate a backlight unit driving apparatus according to a second exemplary embodiment of the present invention.

Referring to FIG. 3A, a backlight unit driving apparatus includes a backlight unit 200, a shared charging circuit 220, a second switch unit 240, a first switch unit 260, a discharge initiating unit 280, and a driving control unit 285.

The backlight unit 200 as substantially the same structure and characteristics as the backlight unit 100 illustrated in FIG. 2A. Likewise, the operations at the first switch unit 260 and the discharge initiating unit 280 are substantially the same as the operations at the first switch unit 130 and the discharge initiating unit 150 illustrated in FIG. 2A. Therefore, detailed description on the overlapping elements or operations will be omitted for the sake of brevity.

A backlight unit driving apparatus as the one illustrated in FIG. 3A generates a voltage for discharge from the shared charging circuit 220, and supplies the generated voltage to the first to n-th flash lamps 200-1, 200-2, ..., 200-n. The second switch unit 240 performs switching so that the voltage for discharge generated at the shared charging circuit 220 can e supplied to the first to n-th flash lamps 200-1, 200-2, ..., 200-n.

The driving control unit 260 controls the shared charging circuit 220 to generate a voltage for discharge according to control signal ①, and then controls the second switch unit 240 so that the voltage charged in the shared charging circuit 220 is supplied to the first to n-th flash lamps 200-1, 200-2, ..., 200-n, in sequence. A flash lamp to discharge is then selected by controlling the first switch unit 260, and the discharge initiating unit 280 is controlled to supply discharge initiating voltage to the selected flash lamp.

Referring to FIG. 3B, the shared charging circuit 220 is implemented as a flyback circuit. The shared charging circuit 220 includes a transformer TF, a transistor TR, a diode D, and a capacitor C.

When the transistor TR is turned on according to the control signal ① being output from the driving control unit 285, voltage in the opposite polarity to that at the primary side is induced at the secondary side of the transformer TF, thereby turning off the diode D. Accordingly, electric current flows the secondary side of the transformer TF, and stored. When the transistor TR is turned off according to the control signal ①, voltage is induced at the secondary side of the transformer TR, in the polarity opposite to voltage when the transistor TR is in on state, thereby turning on the diode D. As a result, voltage stored in the secondary side of the transformer TF is charged in the capacitor C.

The driving control unit 285 controls the second switch unit 240 according to the control signal ①, so that a flash lamp to discharge is selected before the voltage for discharge is charged in the capacitor C. When the flash lamp receives the supply of voltage from the shared charging circuit 220 and thus is ready to discharge, the driving control unit 285 controls the first switch unit 260 to select this flash lamp. As the final step, the driving control unit 285 controls the discharge initiating unit 280 to supply discharge initiating voltage to the flash lamp, which is ready to discharge, according to the control signal ②.

By using a single shared charging circuit 220, which has a fast operation cycle, the number of charging circuits can be reduced. The flash lamps 200-1, 200-2, ..., 200-n may be implemented in a linear arrangement as illustrated in FIGS. 2A and 3A. Alternatively, the flash lamps 200-1, 200-2, ..., 200-n may be implemented in a U-type arrangement, or dot arrangement as generally employed in LEDs.

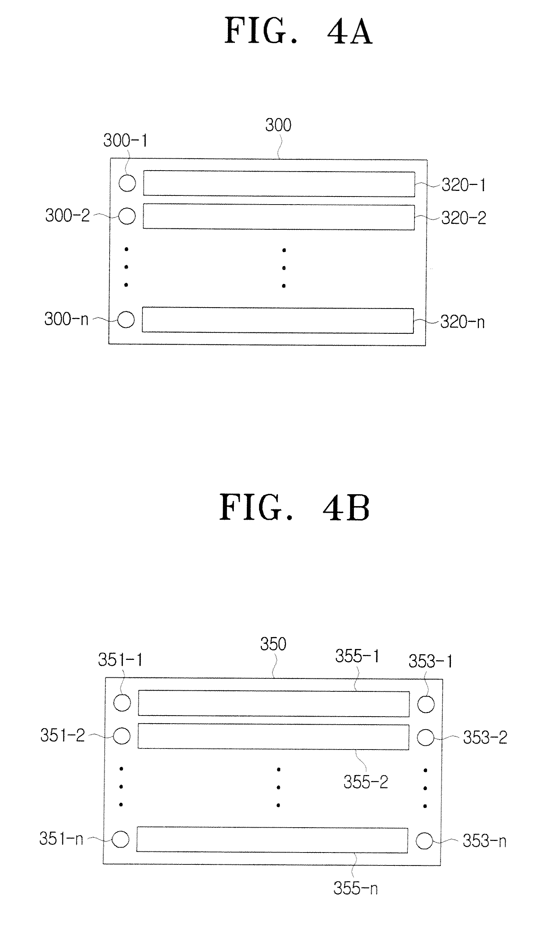

FIG. 4A illustrates the structure of a backlight unit according to a third exemplary embodiment of the present invention.

Referring to FIG. 4A, the backlight unit 300 according to the third exemplary embodiment of the present invention includes a plurality of dot-type flash lamps 300-1, 300-2, ..., 300-n in a linear arrangement along one side, and a plurality of lightguide plates 320-1, 320-2, ..., 320-n to cause the lights from the dot-type flash lamps 300-1, 300-2, ..., 300-n to pass against the front panel uniformly, and to control inter-row light spreading.

The circuit structure to drive the backlight unit 300 illustrated in FIG. 4A is substantially the same as those illustrated in FIGS. 2A and 3A, and therefore, detailed explanation will be omitted for the sake of brevity.

FIG. 4B illustrates the structure of a backlight unit according to a fourth exemplary embodiment of the present invention.

Referring to FIG. 4B, the backlight unit 350 according to the fourth exemplary embodiment of the present invention includes a plurality of lightguide plates 355-1, 355-2, ..., 355-n, and a plurality of dot-type flash lamps 351-1, 351-2, 351-n and 353-1, 353-2, ..., 353-n in linear arrangements along both sides of the lightguide plates 355-1, 355-2, ..., 355-n.

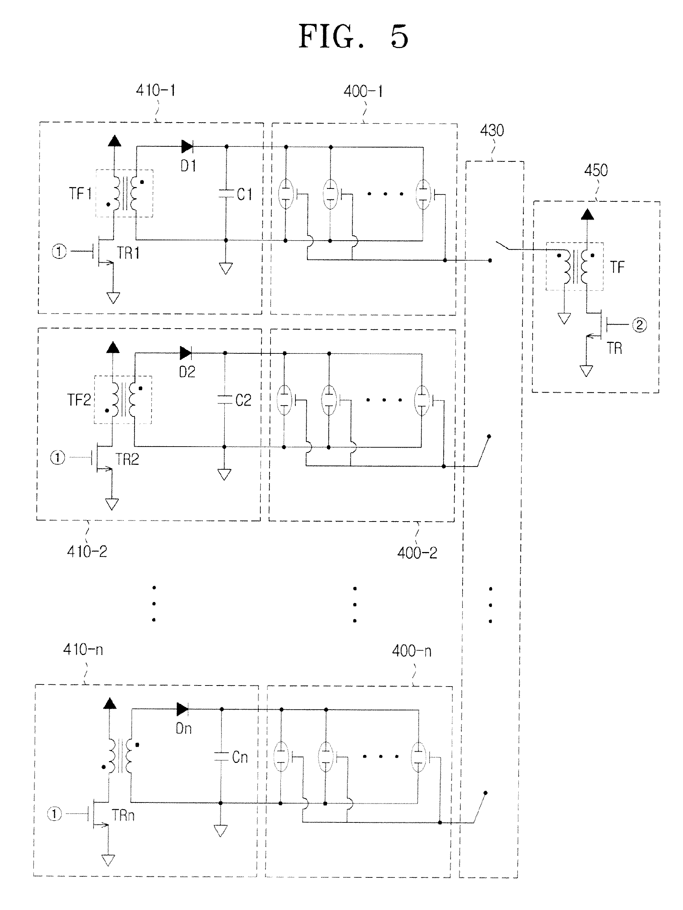

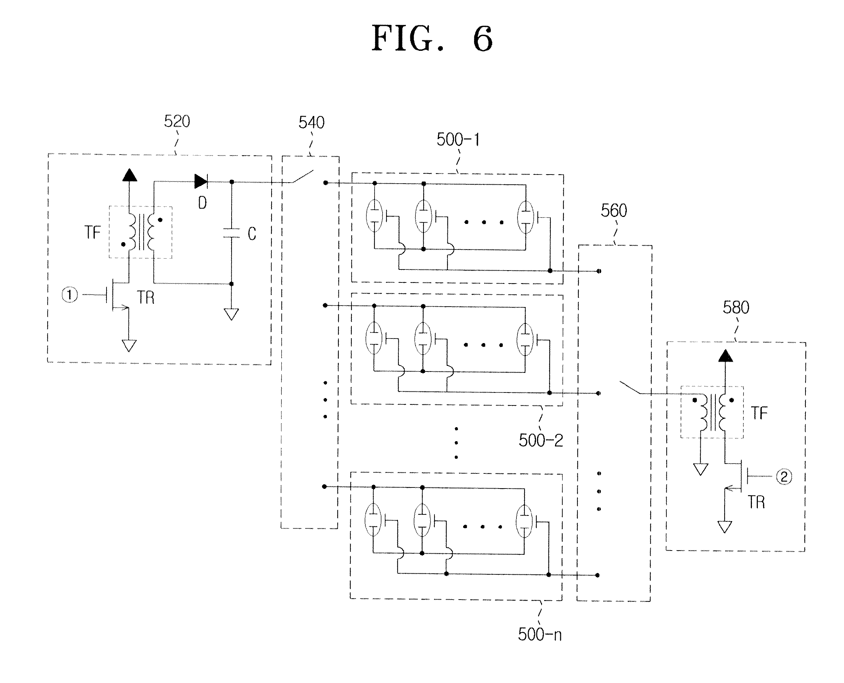

Circuit structure for driving the backlight unit 350 illustrated in FIG. 4B will be explained in detail below, with reference to FIGS. 5 and 6.

FIG. 5 illustrates a backlight unit driving apparatus according to a fifth exemplary embodiment of the present invention. FIGS. 5 to 7 illustrate a backlight unit structure as illustrated in FIG. 1B, in which M number of dot-type flash lamps are arranged in a single row.

Referring to FIG. 5, a backlight unit driving apparatus according to the fifth exemplary embodiment of the present invention includes a first to n-th flash lamp units 400-1, 400-2, ..., 400-n, a first to n-th charging circuits 410-1, 410-2, ..., 410-n, a first switch unit 430, a discharge initiating unit 450 and a driving control unit (not shown).

The first to n-th flash lamps 400-1, 400-2, ..., 400-n are provided in structure in which M number of dot-type flash lamps are connected with each other in parallel. The M number of dot-type flash lamps are driven by a short-width high-current pulse, and are able to output strong lights instantly. The flash lamps radiate light from several hundreds of µ*S* to several tens of *mS,* and have a relatively low radiation period ranging from several Hz to several hundreds of Hz. Alternatively, zenon flash lamps, laser flash lamps, or arc flash lamps may be employed.

The operation of the first charging circuit 410-1 will be explained below. When the first transistor TR1 is turned on according to control signal ① being output from the driving control unit, voltage is induced in the secondary side of the first transformer TF1, in the polarity opposite to that at the primary side, thereby turning off the first diode D1. Accordingly, electric current flows the secondary side of the first transformer TF1, and stored. When the first transistor TR1 is turned off according to the control signal ①, voltage is induced at the secondary side of the first transformer TF1in the polarity opposite to when the first transistor TR1 is in on state, thereby turning on the first diode D1. As a result, voltage stored in the secondary side of the first transformer TF1 is charged in the first capacitor C1.

As the first transistor TR1 repeats on and off according to control signal ①, a sufficient amount of voltage is charged for the discharge of M number of flash lamps of the first flash lamp unit 400-1, and supplied to the first flash lamp unit 400-1 connected in parallel with the first capacitor C1. The above operations are carried out at the second to n-th charging circuits 410-2, ..., 410-n in the same manner, and therefore, further explanation will be omitted for the sake of brevity. It is desirable that the first to n-th charging circuits 410-1, 410-2, ..., 410-n are driven in sequence according to control signal ①, to store a necessary amount of voltage.

The discharge initiating unit 450 includes a transformer TF and a transistor TR. When the transistor TR is turned on according to control signal ② of the driving control unit, voltage is induced at the secondary side of the transformer TF, in the same polarity as that of the primary side, and supplied to the flash lamp units 400-1, 400-2, ..., 400-n as a discharge initiating voltage. A flash lamp to discharge is selected by the switching of the first switch unit 430, before the transistor TR is turned on according to control signal ②. Accordingly, the first switch unit 430 switches the discharge initiating voltage being supplied from the discharge initiating unit 450, so that the first to n-th flash lamp units 400-1, 400-2, ..., 400-n radiate lights in sequence, each for the duration corresponding to one frame divided by n.

If each of the first to n-th flash lamp units 400-1, 400-2, ..., 400-n include two flash lamps, respectively, these can be used as a driving circuit of the backlight unit 350 illustrated in FIG. 4B.

FIG. 6 illustrates a backlight unit driving apparatus according to a sixth exemplary embodiment of the present invention.

The first to n-th flash lamp units 500-1, 500-2, ..., 500-n have the substantially same structure and characteristics as those of the first to n-th flash lamp units 400-1, 400-2, ..., 400-n. Operations at the first switch unit 560 and the discharge initiating unit 580 are also substantially the same as those of the first switch unit 430 and the discharge initiating unit 450 illustrated in FIG. 5. Therefore, detailed explanation will be omitted for the sake of brevity.

The backlight unit driving apparatus illustrated in FIG. 6 generates discharge voltage at a shared charging circuit 520, and supplies the generated voltage to the first to n-th flash lamp units 500-1, 500-2, ..., 500-n. A second switch unit 540 switches so that the discharge voltage generated at the shared charging circuit 520 is supplied to the first to n-th flash lamp units 500-1, 500-2, ..., 500-n.

Referring to FIG. 6, the shared charging circuit 520 is implemented as a flyback circuit. The shared charging circuit 520 includes a transformer TF, a transistor TR, a diode D, and a capacitor C.

When the transistor TR is turned on according to control signal ① being output from a driving control unit (not shown), voltage is induced at the secondary side of the transformer TF, in the polarity opposite to that of the primary side, thereby turning off the diode D. Accordingly, electric current flows the secondary side of the transformer TF, and stored. When the transistor TR is turned off according to control signal ①, voltage is induced at the secondary side of the transformer TF, in the polarity opposite to when the transistor TR is in on state, thereby turning on the diode D. As a result, voltage stored at the secondary side of the transformer TF is charged in the capacitor.

The second switch unit 540 is controlled to select a flash lamp unit to discharge according to control signal ①, before voltage for discharge is charged in the capacitor C. If voltage generated at the shared charging circuit 520 is supplied to the selected flash lamp unit, the driving control unit controls the first switch unit 560 to select this flash lamp unit. The driving control unit then controls the discharge initiating unit 580 so that the flash lamp unit, which is readied to discharge, receives a discharge initiating voltage.

If each of the flash lamp units 500-1, 500-2, ..., 500-n employs two flash lamps, the backlight unit driving apparatus illustrated in FIG. 6 can be used to drive the backlight unit 350 illustrated in FIG. 4B.

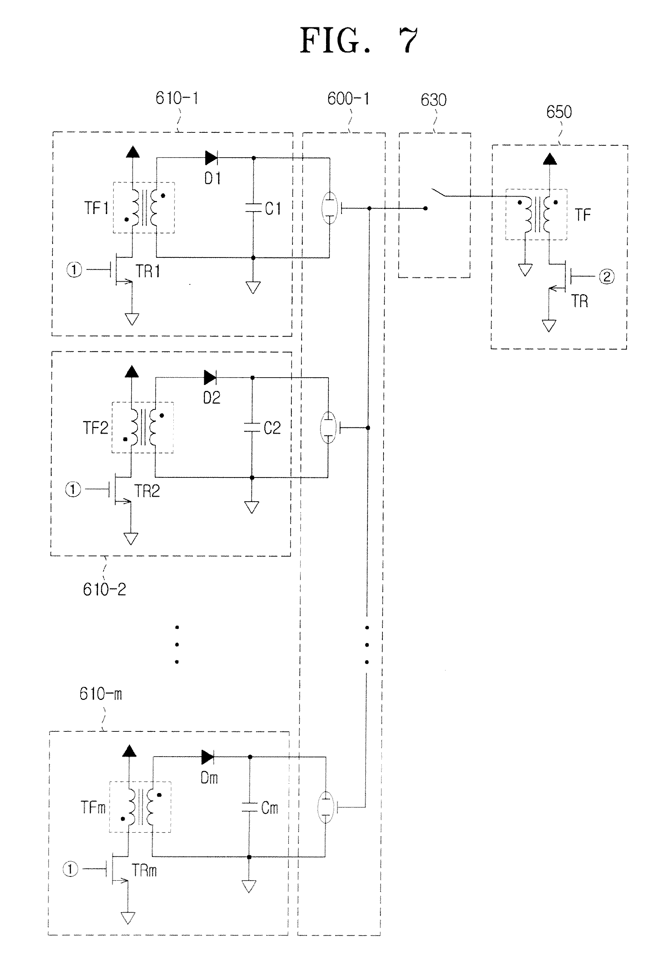

FIG. 7 illustrates a backlight unit driving apparatus according to a seventh exemplary embodiment of the present invention.

A backlight unit illustrated in FIG. 7 is connected with M number of charging circuits 610-1, 610-2, ..., 610-n in each row. Specifically, a flash lamp unit 600-1 in one row includes a M number of dot-type flash lamps, each being connected with the charging circuits 610-1, 610-2, ..., 610-n. The operations of the charging circuits 610-1, 610-2, ..., 610-n are same as those of the charging circuits 610-1, 610-2, ..., 610-n illustrated in FIGS. 2A to 6. The other rows have the same structures, and detailed explanation thereof will be omitted for the sake of brevity.

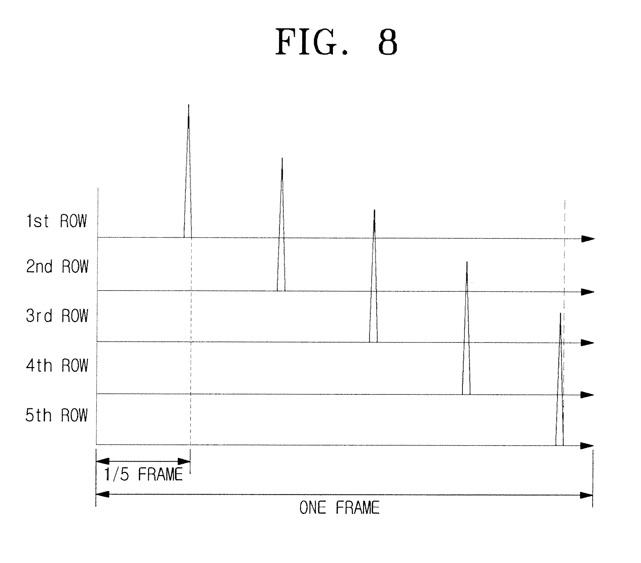

FIGS. 8 to 10 illustrate driving timings used in the exemplary embodiments of the present invention explained above.

The driving timings illustrated in FIGS. 8 to 10 are specifically applicable for a backlight unit having five rows. The driving timings are supplied to the backlight unit by the first switch unit 130, 260, 430, 560, 630.

FIG. 8 specifically illustrates a driving timing to perform backlight scanning, in which the backlights are illuminated from upper to lower rows in sequence, and in which each row is illuminated once in the equally divided intervals of one frame.

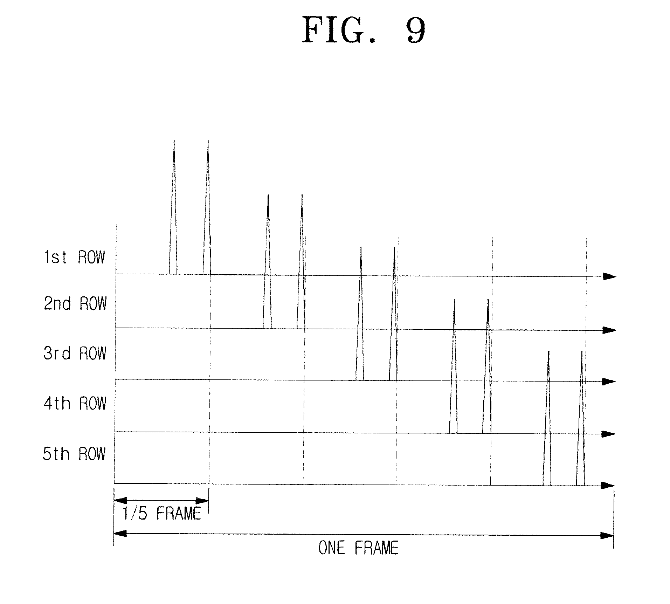

FIG. 9 specifically illustrates a driving timing to perform backlight scanning, in which the backlights are illuminated from upper to lower rows in sequence, and in which each row is illuminated twice in the equally divided intervals of one frame. Although FIG. 9 illustrates an example where the backlights are illuminated twice, the backlights can be illuminated more than twice.

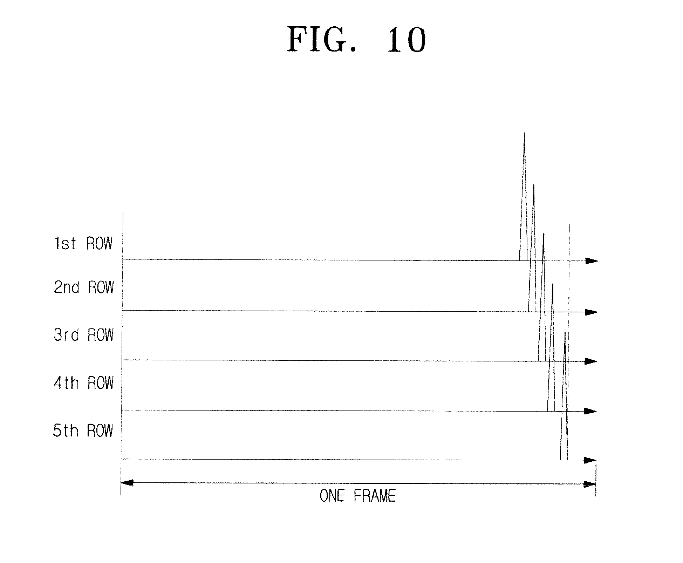

FIG. 10 illustrates a driving timing in which the backlights are illuminated from upper to lower rows almost simultaneously, at the last interval of one frame.

As explained above, illuminating area of a backlight unit is divided into a plurality of sub-areas, and the sub-areas are scanned in a sequential order. Accordingly, afterimage or motion blur is avoided in a motion picture. Additionally, by using a flash lamp which emits strong luminosity instantly, brightness degrading can be avoided.

While the present invention has been shown and described with reference to certain exemplary embodiments thereof, it will be understood by those skilled in the art that various changes in form and details may be made therein without departing from the scope of the invention as defined by the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A backlight apparatus, comprising:
a backlight (100) comprising a plurality of flash lamps (100-1,100-2,100-n);
a charging circuit (110-1,110-2,110-n) to charge a voltage for use by the plurality of flash lamps to discharge;
a discharge initiating circuit (150) to supply a discharge initiating voltage to the plurality of flash lamps to discharge lights; and
a controller circuit (180) to control the charging circuit and the discharge initiating circuit so that the backlight is driven.

2. The backlight apparatus of claim 1, wherein the plurality of flash lamps emit lights from upper to lower rows in a sequential order.

3. The backlight apparatus of any preceding claim, further comprising a switch (130) to switch the discharge initiating voltage being supplied from the discharge initiating circuit, so that the plurality of flash lamps emit lights in the respective rows of the backlight in a sequential order.

4. The backlight apparatus of any preceding claim, wherein the charging circuit comprises charging circuits corresponding to the number of rows of the backlight.

5. The backlight apparatus of any preceding claim, further comprising a switch (240) to switch a voltage being supplied from the charging circuit so that the plurality of flash lamps emit lights in the respective rows of the backlight.

6. The backlight apparatus of any preceding claim, wherein the plurality of flash lamps comprise a linear or a dot-type arrangement.

7. The backlight apparatus of any preceding claim, wherein the flash lamps comprise one of zenon flash lamp, laser flash lamp, and arc discharge flash lamp.

8. The backlight apparatus of any preceding claim, wherein the backlight comprises a plurality of dot-type flash lamps (351-1,351-2,351-n) arranged in a vertical direction along one side of a screen; and
lightguide plates (355-1,355-2,355-3) to cause the lights from the plurality of dot-type flash lamps to pass against the front screen uniformly.

9. The backlight apparatus of claim 8, wherein the backlight further comprises a plurality of dot-type flash lamps (353-1,353-2,353-n) arranged in a vertical direction along the other side of the screen.

10. The backlight apparatus of any preceding claim, wherein the charging circuit comprises:
a transformer (TF) in which the primary side has the opposite polarity to the secondary side;
a transistor (TR) connected between the primary side and the ground of the transformer, to be turned on and off according to control of the controller circuit;
a capacitor (C) to store a voltage being supplied from the transformer; and
a diode (D) connected between the secondary side of the transformer and the capacitor, to supply a voltage induced at the secondary side of the transformer to the capacitor, if the transistor is in off state.

11. The backlight apparatus of claim 10, at least one of the plurality of flash lamps is connected in parallel with the capacitor, to receive the voltage stored at the capacitor to use for discharging the plurality of flash lamps.

12. The backlight apparatus of any preceding claim, wherein the controller circuit controls the discharge initiating circuit to supply the discharge initiating voltage to the plurality of flash lamps, if the flash lamps are charged with voltage necessary for discharge.

13. A method of driving a backlight unit comprising a plurality of flash lamps, the method comprising:
charging a voltage for discharging the plurality of flash lamps; and
supplying a discharge initiating voltage to the plurality of flash lamps to discharge lights.

14. The method of claim 13, further comprising switching the discharge initiating voltage so that the plurality of flash lamps emit lights from upper to lower rows in a sequential order.

15. The method of claim 13 or 14, wherein the charging comprises charging the plurality of flash lamps in respective rows with voltage necessary for discharge, sequentially.

16. The method of claim 13, 14 or 15, wherein the discharge of light of the plurality of flash lamps occur in a sequential order.

17. The method of claim 16, wherein the discharge of light of the plurality of the flash lamps occur in synchronization with the scanning of a corresponding portion of a video image.

18. The method of claim 17, wherein the scanning of the video image occurs in an LCD panel.

19. The method of claim 18, wherein the method of driving a backlight unit is incorporated in a liquid crystal display.

20. The method of any of claims 16 to 19, wherein the discharge of light of each of the plurality of flash lamps occur at plural times, before a next flash lamp is discharged.

21. The method of claim 20, wherein each flash lamp is discharged twice before the next flash lamp is discharged.

22. The method of any of claims 13 to 15, wherein the discharge of light of the plurality of flash lamps occur substantially simultaneously with each other.
